(19) Europäisches Patentamt / European Patent Office / Office européen des brevets

(11) **EP 2 686 931 B1**

(12) **FASCICULE DE BREVET EUROPEEN**

(45) Date de publication et mention de la délivrance du brevet:
**06.05.2015 Bulletin 2015/19**

(21) Numéro de dépôt: **12709636.0**

(22) Date de dépôt: **19.03.2012**

(51) Int Cl.:
*H02H 9/02* *(2006.01)*    *H01F 29/14* *(2006.01)*
*H01F 38/02* *(2006.01)*

(86) Numéro de dépôt international:
**PCT/EP2012/054812**

(87) Numéro de publication internationale:
**WO 2012/126886 (27.09.2012 Gazette 2012/39)**

(54) **LIMITEUR SÉRIE DE COURANT PAR CIRCUIT MAGNÉTIQUE À TROUS ET FENÊTRES**

SERIELLER STROMBEGRENZER MIT BOHRUNGEN UND FENSTER AUFWEISENDEN MAGNETISCHEM KREIS

SERIES CURRENT LIMITER WITH MAGNETIC CIRCUIT HAVING HOLES AND WINDOWS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.03.2011 FR 1152243**

(43) Date de publication de la demande:
**22.01.2014 Bulletin 2014/04**

(73) Titulaires:
• **Electricité de France**
**75008 Paris (FR)**
• **Universite D'Artois**
**62000 Arras (FR)**

(72) Inventeurs:
• **BRUDNY, Jean-François**
**F-59830 Wannehain (FR)**
• **GUUINIC, Philippe**
**F-75014 Paris (FR)**
• **COSTAN, Valentin**
**F-92120 Montrouge (FR)**

(74) Mandataire: **Regimbeau**
**20, rue de Chazelles**
**75847 Paris Cedex 17 (FR)**

(56) Documents cités:
EP-A1- 0 183 015          EP-A1- 2 139 088
GB-A- 2 029 116           US-A- 4 152 637
US-A1- 2010 046 125

## Description

DOMAINE TECHNIQUE GENERAL

La présente invention concerne un limiteur de courant, adapté pour être branché en série entre d'une part une source de courant alternatif et d'autre part une charge, comportant un circuit magnétique comportant un noyau, et au moins une bobine inductive bobinée autour du noyau et reliée d'une part à la source de courant alternatif et d'autre part à la charge.

ETAT DE L'ART

Les réseaux électriques alternatifs de transport en haute tension, de distribution en moyenne et basse tensions, ainsi que les réseaux industriels d'alimentation interne des usines sont inévitablement l'objet de défauts (accident, défaillance de matériel, foudre...), d'autant que depuis une dizaine d'années, les risques de défaut augmentent du fait du vieillissement des réseaux.

Simultanément, le raccordement aux réseaux de nouveaux types d'installations, comme des installations décentralisées de production d'énergie (les fermes éoliennes par exemple), fait augmenter la puissance des courts-circuits dans les réseaux en cas de défaut. L'amplitude des courants de court-circuit est ainsi de l'ordre de quelques kA jusqu'à plusieurs dizaines ou centaines de kA, selon les types de réseaux. Les courants de forte amplitude peuvent endommager les réseaux.

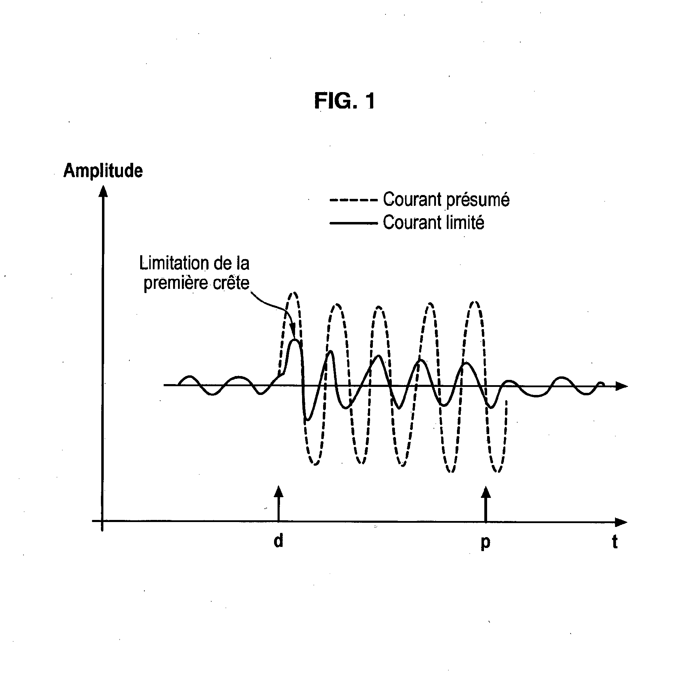

La figure 1 montre schématiquement en traits pointillés les courants alternatifs de court-circuit en cas de défaut à l'instant d.

On connaît des dispositifs de protection s'enclenchant à l'instant p sur la figure 1, et qui ont pour fonction d'interrompre ces courants de défaut, pour revenir à un fonctionnement normal des réseaux.

Les dispositifs connus comportent en général des organes de coupure (sectionneur, interrupteur, disjoncteur) et des impédances coopérant avec les organes pour limiter les courants de défaut.

Etant donné que les courants d'amplitude extrêmement importante sont rares, les fusibles se sont imposés comme une solution peu onéreuse, en basse et moyenne tensions. En revanche, il faut remplacer les fusibles pour revenir à un fonctionnement normal du réseau, ce qui demande des opérations de maintenance onéreuses.

Il existe des dispositifs connus qui limitent les courants de défaut mais qui n'ont pas besoin d'être remplacés, comme par exemple les disjoncteurs limiteurs électromécaniques. Ils ne fonctionnent cependant qu'en basse tension.

Pour les réseaux de grande puissance, les dispositifs limiteurs connus sont par exemple les fusibles pyrotechniques, les disjoncteurs statiques à électronique de puissance, les limiteurs résistifs à supraconducteur, les limiteurs hybrides (comportant par exemple un supraconducteur assisté par un organe de coupure ultrarapide) ou les limiteurs à circuit magnétique saturable.

Le document US 4 152 637 traite d'un limiteur de courant, dans lequel la saturation magnétique du circuit du limiteur est réalisée par un enroulement dont l'intensité du courant le traversant est commandée par un contrôleur recevant un signal de contrôle d'un capteur de courant d'entrée, afin de limiter le courant d'enroulement nécessaire à la saturation.

Les dispositifs de protection en grande puissance connus n'ont cependant pas donné totale satisfaction. Ils sont notamment très encombrants et/ou lourds et onéreux, notamment ceux comportant des matériaux supraconducteurs.

PRESENTATION DE L'INVENTION

L'invention propose de pallier au moins un de ces inconvénients, en mettant en oeuvre un circuit magnétique qu'il est possible de saturer localement en utilisant un courant continu. Cette procédure conduit à ce qui est qualifié d'entrefer virtuel (EV).

A cet effet, l'invention propose un limiteur de courant conforme à la revendication 1.

L'invention est avantageusement complétée par les caractéristiques suivantes, prises seules ou en une quelconque de leur combinaison techniquement possible :

- le limiteur est en outre adapté pour fonctionner selon un troisième état dans lequel l'entrefer virtuel est partiellement ouvert et ouvre partiellement le circuit en désaturant partiellement le circuit au niveau de l'entrefer, de sorte que le courant entre la source et la charge est partiellement limité ;

- il comporte une commande passive ou active ou intelligente de l'ouverture totale ou partielle ou de la fermeture totale ou partielle de l'entrefer virtuel ;

- la commande passive comporte une liaison permanente entre la source de courant continu et le bobinage ;

- la commande active comporte un interrupteur commandé par un détecteur entre la source de courant continu et le bobinage ;

- la commande intelligente commande une source de courant continu comportant un variateur relié au bobinage ;

- l'entrefer virtuel comporte une paire de trous auxiliaires, comportant un bobinage auxiliaire, les trous auxiliaires ayant un alignement perpendiculaire à un alignement des trous de la paire de trous sur laquelle est bobiné le bobinage ;

- l'entrefer virtuel comporte une spire en court-circuit entre les trous de la paire ;

- l'entrefer virtuel comporte un entrefer mécanique ;

- l'entrefer virtuel comporte en outre au moins un aimant permanent.

L'invention présente de nombreux avantages.

L'invention fournit un limiteur provoquant peu de pertes et une faible chute de tension sur le réseau en régime normal, mais limitant l'amplitude des courants de court-circuit en cas de défaut. Le limiteur de l'invention retrouve cependant sa fonction de limitation de courant de défaut, sans aucune maintenance, alors que le réseau revient à son régime normal.

Les grandes performances du limiteur de l'invention permettent de réduire d'autant les performances des organes de coupure qui lui sont associés. L'invention permet donc de fournir un dispositif de protection des réseaux peu onéreux, notamment car il peut ne pas comporter de matériau supraconducteur.

Plus précisément, les ampères-tours continus alimentant le bobinage de saturation du circuit magnétique du limiteur sont faibles, puisque la saturation locale du circuit magnétique est obtenue facilement (le périmètre des trous sur lesquels le bobinage est bobiné est faible). A cet égard, un matériau supraconducteur peut être utilisé pour le bobinage auxiliaire, mais il n'est pas indispensable.

La constante de temps du bobinage peut être faible pour couper rapidement le courant continu.

Le limiteur peut comporter une commande passive ou active, voire intelligente, selon le type de réseau, le type de dispositif de protection et l'amplitude de courant.

Le taux de limitation du limiteur peut facilement dépasser 50%.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1, déjà commentée, représente schématiquement l'évolution de courants de défaut dans un réseau ;
- la figure 2A représente schématiquement un mode de réalisation possible d'un limiteur de courant selon l'invention, dans un réseau ;
- la figure 2B représente schématiquement un limiteur selon l'invention dans un réseau électrique comportant plusieurs sources et plusieurs charges ;
- la figure 3 représente schématiquement un schéma électrique équivalent d'une bobine d'un limiteur selon l'invention ;
- la figure 4 représente schématiquement une plaque comportant des imbrications de tôles ;
- les figures 5A et 6A représentent schématiquement un premier état d'un limiteur de courant selon l'invention en l'absence de défaut ;
- les figures 5B et 6B représentent schématiquement un deuxième état d'un limiteur de courant selon l'invention en présence d'un défaut ;

- les figures 7A et 7B représentent schématiquement un troisième état d'un limiteur de courant selon l'invention ;
- la figure 8 représente schématiquement une commande active d'un limiteur selon l'invention ;
- la figure 9 représente schématiquement une commande intelligente d'un limiteur selon l'invention ; et
- les figures 10 à 14 représentent schématiquement différentes variantes de réalisation d'un entrefer virtuel selon l'invention.

Sur l'ensemble des figures, les éléments similaires portent des références numériques identiques.

DESCRIPTION DETAILLEE

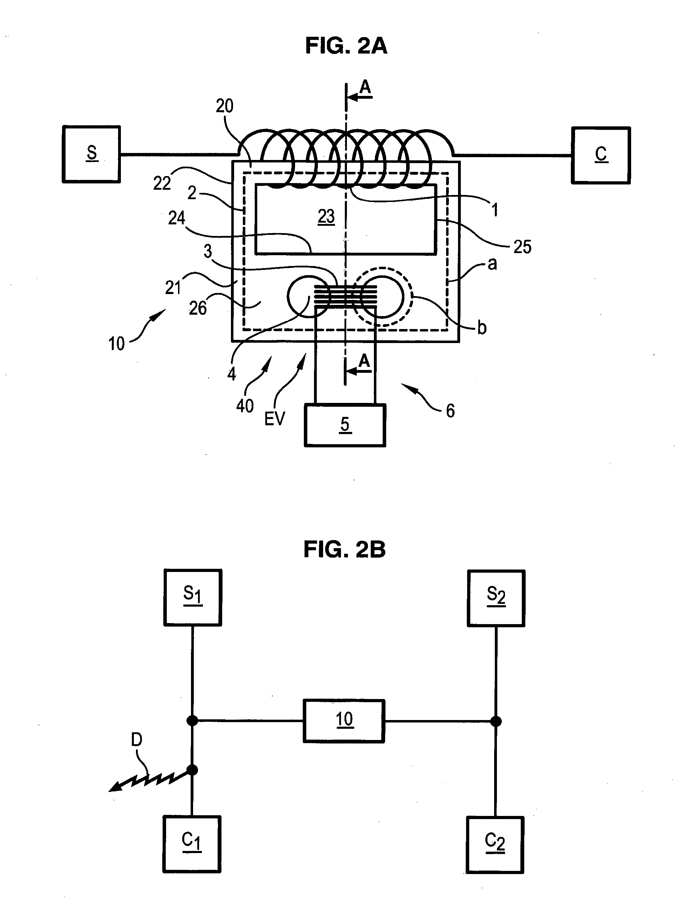

La figure 2A représente schématiquement un mode de réalisation possible d'un limiteur 10 de courant selon l'invention.

Le limiteur 10 est adapté pour être branché en série entre d'une part une source S de courant alternatif et d'autre part une charge C.

L'ensemble formé par la source S, le limiteur 10 et la charge C forme donc un réseau électrique. Le retour du courant vers la source S n'est pas représenté sur ce type de schéma simplifié unifilaire.

Dans les développements qui suivent, la source de courant S est une source de courant monophasé, pour des raisons de clarté et de simplicité d'explication. On comprend cependant que l'invention s'applique bien entendu à un réseau comportant une source de courant multiphasé, et notamment une source de courant triphasé.

De même, comme le montre la figure 2B, l'invention peut s'appliquer à un réseau électrique comportant plusieurs sources, par exemple S1 et S2, et plusieurs charges, par exemple C1 et C2. Un limiteur 10 est installé en série entre les sources S1 et S2. Grâce au limiteur 10, une meilleure qualité de tension est délivrée en régime normal par les sources S1 et S2 sur le réseau. En cas de défaut D sur le côté S1-C1 du réseau, le limiteur 10 limite également la contribution de la source S2 à un courant du défaut D, et le courant de défaut précité ne dépasse pas le pouvoir de coupure des dispositifs de protection en place sur le réseau.

Le limiteur 10 comporte principalement un circuit magnétique 2.

Le circuit 2 est matérialisé par une plaque 21 comportant des contours 22 périphériques externes. La plaque 21 comporte une fenêtre 23 délimitant des contours 24 périphériques internes de la plaque 21. Le circuit 2 comporte également un noyau 20, délimité par les contours 22 et 24 de la plaque 21. Il comporte enfin deux culasses 25, situées chacune entre le noyau 20 et une partie 26 principale de la plaque 21, la partie 26 étant opposée au noyau 20.

Le limiteur 10 comporte en outre au moins une bobine 1 inductive bobinée autour du noyau 20. La bobine 1 est reliée d'une part à la source S et d'autre part à la charge C.

Le circuit magnétique 2 est préférentiellement mécaniquement fermé comme par exemple représenté sur la figure 2A.

La plaque 21 peut être monobloc, ou peut comporter une superposition de tôles 27 magnétiques.

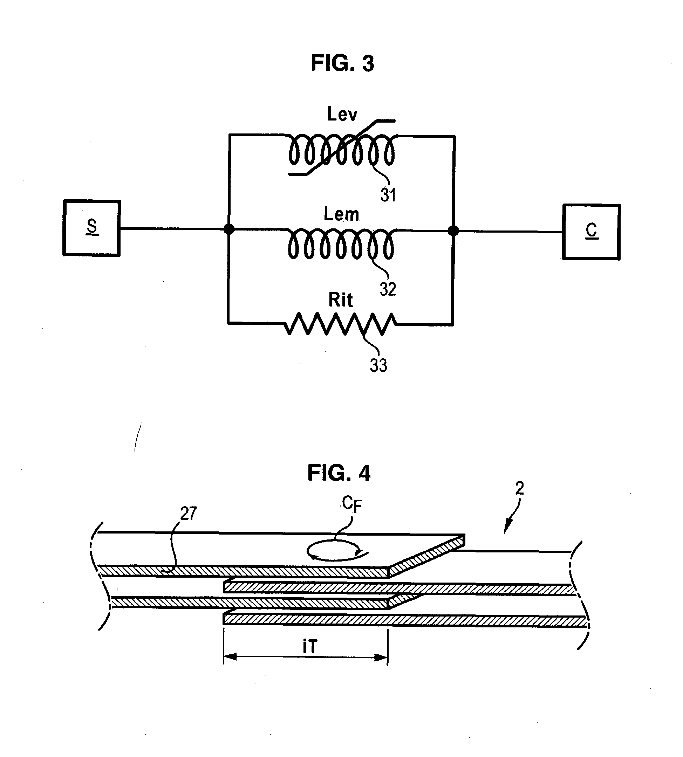

Comme le montre la figure 4, le circuit 2 peut aussi comporter une zone IT d'imbrication de tôles 27 magnétiques. Chaque zone IT est réalisée en cours de fabrication de la plaque 21, lors de l'empilage des tôles 27. Chaque zone IT peut être localisée dans le noyau 20 ou dans les culasses 25 par exemple.

En référence de nouveau à la figure 2A, le limiteur 10 comporte en outre au moins un entrefer virtuel EV.

L'entrefer virtuel EV comporte

- au moins une paire 40 de trous 4 dans le circuit 2 magnétique, et
- un bobinage 3 se bobinant entre les trous 4 de chaque paire 40 de trous 4.

Le bobinage 3 est relié à une source 5 de courant continu.

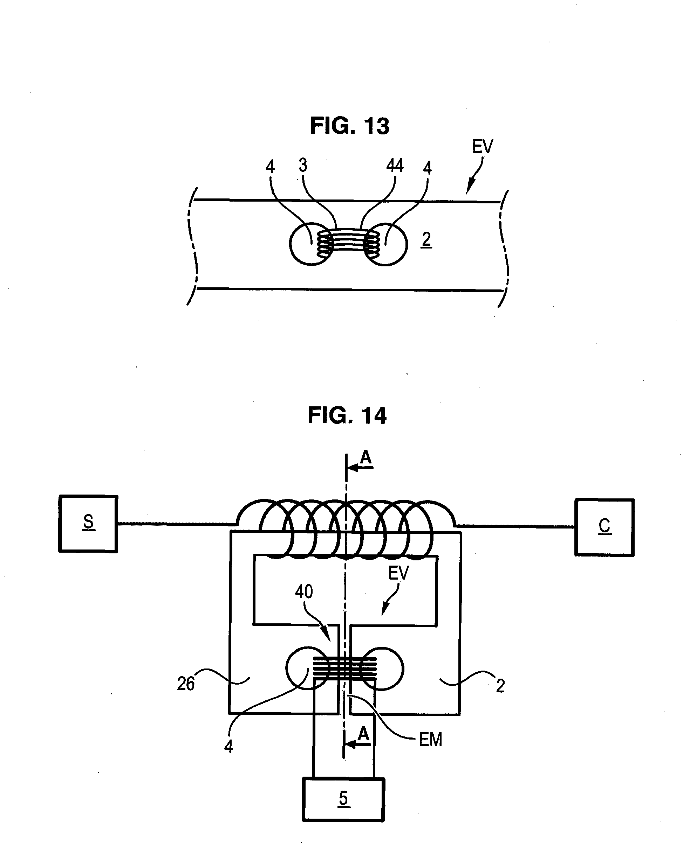

Le circuit 2 peut aussi comporter un entrefer mécanique EM en série dans le circuit 2, comme représenté sur la figure 14 par exemple.

La bobine 1 a une inductance d'une valeur L.

L'impédance L est non-linéaire, et elle est telle que :

$$L\min \leq L \leq L\max$$

La valeur de L peut varier entre Lmin et Lmax en fonction de la configuration du circuit 2.

Le schéma équivalent de cette impédance L est représenté en figure 3. La bobine 1 est donc équivalente à

- une bobine 31 d'inductance non-linéaire Lev, inductance qui dépend de l'état de l'entrefer EV, et
- une bobine 32 d'inductance linéaire Lem, inductance fixe correspondant à l'entrefer EM, le cas échéant, et
- une résistance 33 Rit, qui correspond aux pertes dues aux courants de Foucault dans la zone IT.

Comme le montre la figure 4, la zone IT oblige le flux magnétique à passer d'une tôle à l'autre en générant des courants $C_F$ de Foucault dans l'épaisseur des tôles 27, c'est-à-dire des courants induits par des variations d'induction magnétique. Finalement; la fermeture magnétique du circuit 2, par la mise en série de l'entrefer virtuel EV, de l'entrefer mécanique EM et de l'imbrication des tôles IT permet d'obtenir une impédance de la bobine 1 équivalente à la mise en parallèle de l'inductance Lev, de l'inductance Lem et de la résistance Rit, mais en série entre la charge C et la source S.

En régime normal, le courant du réseau passe par la bobine 31 d'inductance Lev, dont l'impédance est faible ou, le cas échéant, par les deux inductances Lev et Lem en parallèle. En régime de défaut, l'impédance Lev de la bobine 31 augmente, le courant est limité. Le cas échéant, en régime de défaut et en présence d'un entrefer EM, l'impédance Lev est très supérieure à Lem : le courant de court-circuit passe dans la bobine 32 d'inductance Lem et/ou, le cas échéant, dans la résistance parallèle Rit.

Les valeurs des impédances 31, 32 et 33 résultent des choix faits dans la conception du circuit 2. Par exemple, une légère variation de la section droite du circuit 2 permet de contrôler la saturation magnétique du circuit 2, cette dernière étant génératrice de surtensions. La résistance 33 permet une réduction des surtensions et une décroissance rapide de l'asymétrie du courant de défaut, telle que représenté en figure 1.

Un entrefer mécanique EM permet de faire varier la valeur de Lmax. La présence de plusieurs entrefers EM permettra d'ajuster précisément la valeur d'inductance équivalente du limiteur complet pendant tous les régimes, y compris, le régime intermédiaire, correspondant au troisième état de l'EV, détaillé plus loin.

A cet effet, comme le montre la figure 14, un entrefer EM peut être localisé à tout endroit dans le circuit 2, notamment sur un axe de symétrie A-A du circuit 2, au niveau de la partie 26 principale, mais également au niveau d'au moins une culasse 25 pour des raisons de commodité de fabrication du circuit 2.

Du fait de son bobinage autour du noyau 20 et du fait qu'elle peut être parcourue par un courant alternatif, la bobine 1 peut créer dans le circuit 2 une force magnétomotrice référencée par $FAt_a$ correspondant à des ampères-tours alternatifs. La force magnétomotrice $FAt_a$ est d'une intensité égale au produit du nombre de spires de la bobine 1 par le courant alternatif en ampères qui les traverse.

De même, du fait de son bobinage autour du circuit 2 entre les trous 4 et du fait qu'il peut être parcouru par un courant continu, le bobinage 3 peut créer une force magnétomotrice référencée par $FAt_c$ correspondant à des ampères-tours continus. La force magnétomotrice $FAt_c$ est égale au produit du nombre de spires du bobinage 3 par le courant continu en ampères qui les parcourt. La force magnétomotrice $FAt_c$ ainsi créée par le bobinage 3 peut saturer magnétiquement le circuit 2, localement au niveau de l'entrefer EV.

Les ampères-tours (At) continus alimentant le bobinage 3 sont relativement faibles. Ils sont compris entre 500 At et plusieurs milliers d'At, selon le diamètre des trous 4 et en fonction de la caractéristique de variation de l'induction magnétique B en fonction du champ magnétique H dans les tôles 27.

Il y a donc des pertes et des échauffements relativement faibles dans le bobinage 3. Si des courants beaucoup plus importants sont souhaités, le bobinage peut être en matériau supraconducteur, mais cela n'est pas indispensable.

La dimension virtuelle de l'EV augmente avec la valeur des ampères-tours.

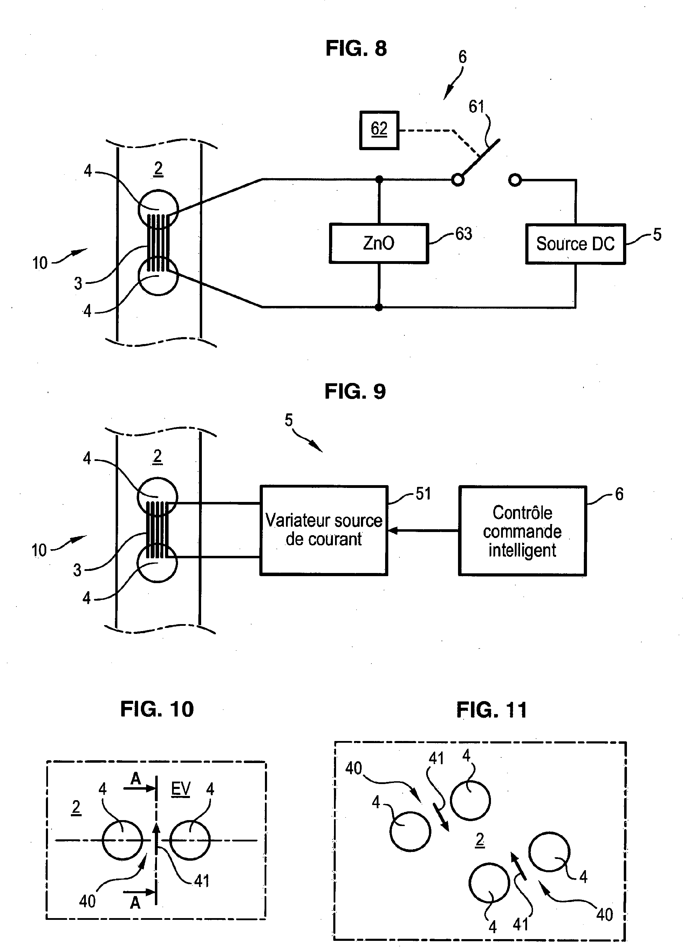

D'une manière générale, il est possible de modifier le nombre de paires 40 sur le circuit 2 (le circuit 2 peut notamment comporter une pluralité d'entrefers virtuels EV), et au sein de chaque paire 40 de modifier la forme, le diamètre, et la position des trous 4. La disposition des paires doit être telle qu'elle n'engendre aucune circulation de flux continu dans la totalité du circuit 2. Ceci est obtenu en respectant l'orientation AA de chaque paire de trous ou en annulant leur résultante, comme le montre la figure 11. L'insertion d'un petit entrefer mécanique EM contribue à réduire le flux résiduel dans la totalité du circuit 2.

L'augmentation du nombre de trous ne modifie pas considérablement les valeurs des impédances de la bobine 1 ou du bobinage 3, ni l'ordre de grandeur des At totaux nécessaires à la saturation de l'entrefer EV. La préférence pourra répondre à des facilités de fabrication des tôles 27 ou de la bobine 1 ou du bobinage 3 et/ou à des facilités de contrôle de commande intelligente.

Des formes rectangulaires des trous ont tendance à augmenter les courants harmoniques. Là encore, la préférence pourra répondre à des facilités de fabrication.

Le limiteur 10 fonctionne entre au moins deux états, en fonction d'un ratio r tel que :

$$r = \frac{FAt_a}{FAt_c}.$$

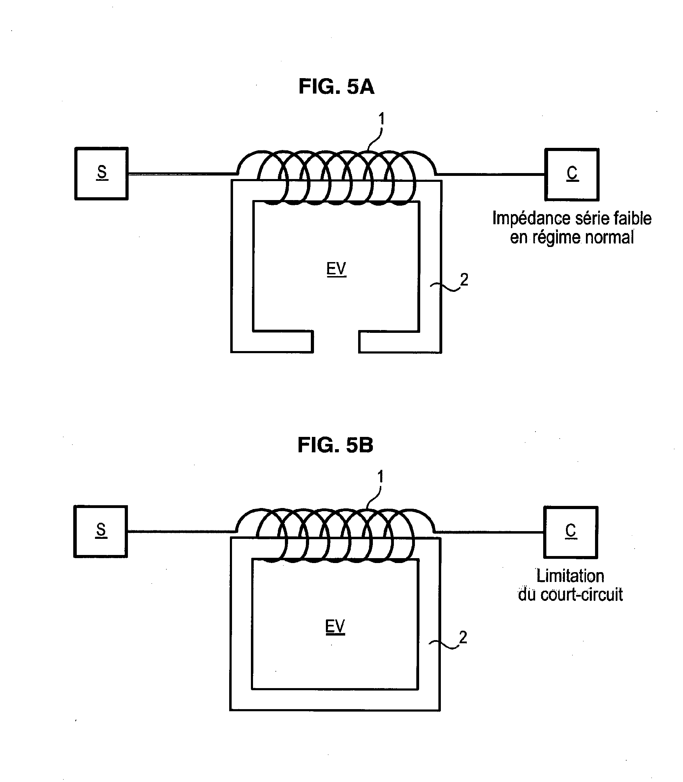

Un premier état de fonctionnement, correspondant au régime normal du réseau et représenté schématiquement sur la figure 5A, est un état dans lequel l'entrefer virtuel EV est magnétiquement ouvert, c'est-à-dire que l'entrefer EV ouvre magnétiquement le circuit magnétique 2.

L'ouverture magnétique de l'entrefer EV est effectuée en saturant magnétiquement le circuit 2, localement au niveau de l'entrefer EV.

A cet effet, le bobinage 3 de la figure 2 est parcouru par un courant continu, ce qui crée un flux magnétique continu Fc circulant dans le circuit 2 sur le trajet b autour des trous 4. Le flux magnétique continu Fc crée la force magnétomotrice $FAt_c$ saturant magnétiquement le circuit 2, localement au niveau de l'entrefer EV, ce qui ouvre le circuit 2 au niveau de l'entrefer EV et ce qui réduit considérablement l'amplitude dans le circuit 2 d'un flux magnétique alternatif créé par la bobine 1. En d'autres termes, la force $FAt_a$ est d'une intensité inférieure à $FAt_c$.

En régime normal du réseau, on a donc

$$r < 1.$$

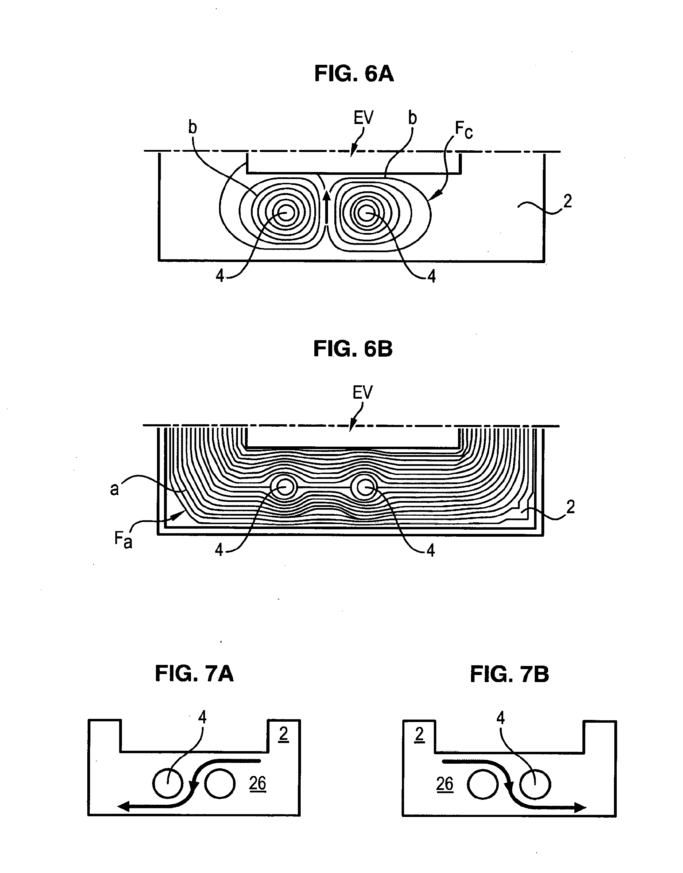

La figure 6A montre également le régime normal du réseau et la circulation du flux magnétique continu Fc sur les trajets b autour des trous 4, ainsi que la quasi-absence de circulation d'un flux magnétique alternatif dans le circuit 2.

Dans le premier état, du fait de l'ouverture de l'entrefer EV et de la quasi-absence de circulation de flux magnétique alternatif, l'impédance L de la bobine 1 inductive est faible, de sorte que le courant entre la source S et la charge C n'est pas limité.

Un deuxième état de fonctionnement du limiteur 10, correspondant à un défaut dans le réseau et représenté schématiquement sur la figure 5B, est un état dans lequel l'entrefer virtuel EV est magnétiquement fermé, c'est-à-dire que l'entrefer EV ferme magnétiquement le circuit magnétique 2.

Le deuxième état est caractérisé par le fait que l'intensité de la force $FAt_c$ est très inférieure à l'intensité de la force $FAt_a$. On a donc :

$$r \gg 1.$$

Pour avoir cette situation, il faut

- qu'il y ait un courant de court-circuit de grande amplitude dans le réseau ($FAt_a$ est donc très importante), et/ou
- que le courant traversant le bobinage 3 soit nul (on a alors $FAt_c$ égale à 0).

Une telle situation entraîne une désaturation du circuit magnétique au niveau de l'entrefer EV, et l'absence de saturation locale du circuit 2 augmente l'amplitude dans le circuit 2 du flux magnétique alternatif $F_A$ créé par la bobine 1 sur les trajets a, comme le montrent les figures 2A et 6B. Sur la figure 6B, le flux alternatif $F_A$ parcourt les parties internes et externes du circuit 2 par rapport aux trous 4.

Les trajets a, circulant sur toute la longueur du circuit 2, sont grands devant les trajets b autour des trous 4. Le rapport a/b est de l'ordre de 5 à 10. Il augmente d'autant plus que le niveau de tension de la bobine 1 demande une isolation importante par rapport à la masse.

La circulation du flux alternatif $F_A$ induit une tension importante aux bornes de l'impédance L branchée en série avec la source S et la charge C, et l'impédance L de la bobine 1 limite le courant de défaut entre la source S et la charge C.

Comme le montre la figure 1 en traits pleins, dans le deuxième état, le limiteur selon l'invention limite

- le courant de court-circuit, dès la première crête, et
- la valeur efficace du courant de défaut (en diminuant ainsi les effets thermique et électrodynamique du défaut),

cette limitation étant effectuée pendant toute la durée du défaut et jusqu'à faciliter le déclenchement, à l'instant p, des dispositifs de protection situés en aval du limiteur.

Le limiteur 10, branché en série, fonctionne, pendant le court-circuit, avec des flux magnétiques extrêmement non-linéaires. Les courants et tensions dans le réseau peuvent s'en trouver très déformés, et peuvent notamment comporter de nombreuses harmoniques. Cela n'a pas d'importance puisque, par nature, l'évolution des courants de défaut est incertaine en valeur efficace (cette dernière est fonction de l'évolution des dégâts dans le réseau) et en forme (cette dernière est fonction des impacts des tensions d'arc).

Après l'élimination du défaut sur le réseau et l'élimination de la tension transitoire de rétablissement, l'entrefer EV est de nouveau ouvert, sans maintenance particulière, et le courant retrouve sa valeur normale sur le réseau. Et en cas de nouveau de court-circuit de défaut, le circuit 2 est de nouveau fermé magnétiquement par la fermeture rapide de l'entrefer EV, et ainsi de suite.

L'ordre de grandeur de la constante de temps du bobinage 3 est de préférence de quelques ms, et dépend principalement du nombre de spires du bobinage 3 et de sa résistance. Une constante de temps faible constitue un avantage de l'invention, notamment dans un réseau selon la figure 2B. En effet, une limitation très importante du courant revient à séparer les sources S1 et S2 pendant le défaut. Le court-circuit côté S1-C1, qui se traduit par une chute de tension importante de la source S1, a ainsi peu d'effet sur la tension délivrée par la source S2 du côté S2-C2. Dès que le défaut D du côté S1-C1 est éliminé, les deux sources S1 et S2 se retrouvent en parallèle, avec pour avantage une meilleure qualité de tension.

D'une manière générale, le taux de limitation du limiteur peut facilement dépasser 50%.

S'il est toujours souhaitable de limiter les courants de défaut d'amplitude extrême, et ce dès la première crête, pour limiter les forces électromagnétiques dans le réseau, il est souvent préférable de ne pas limiter les régimes transitoires dits normaux du courant de charge sur le réseau (sauf bien entendu si leur durée excessive est un signe de défaut sur le réseau). Les régimes transitoires normaux sont en effet dus par exemple :

- à l'enclenchement sur le réseau de transformateurs,
- au démarrage de moteurs sur le réseau,
- etc.

Le limiteur est alors adapté aux besoins du réseau (réseau de transport, réseau de distribution ou réseau industriel) et à la variété des gammes de puissance (régime normal et puissance de court-circuit).

C'est pour cette raison qu'il existe un troisième état de fonctionnement, en variante optionnelle.

Le troisième état correspond à un régime intermédiaire du réseau, dans lequel le courant alternatif est légèrement supérieur au courant nominal de la charge. Dans le régime intermédiaire, on a donc la condition suivante :

r légèrement supérieur à 1.

Le circuit 2 est alors désaturé partiellement au niveau de l'entrefer EV, et le flux magnétique alternatif circule, alternativement, d'un côté et de l'autre, en alterne interne/externe, par rapport aux trous 4, comme le montrent les figures 7A et 7B.

Cette dé-saturation partielle résulte de la combinaison des flux alternatif $F_A$ (imposé par $FAt_a$) et continu Fc (imposé par $FAt_c$).

L'ouverture de l'entrefer EV en régime normal du réseau ou la fermeture de l'entrefer EV lors d'un défaut sur le réseau peut être passive ou active ou dite intelligente.

On décrit dans un premier temps une commande passive de l'ouverture et de la fermeture de l'entrefer EV.

Dans ce cas, le limiteur 10 comporte une commande 6 passive de l'ouverture et de la fermeture de l'entrefer EV.

La commande 6 passive comporte une liaison permanente entre la source 5 et le bobinage 3, conforme à la figure 2A.

La commande passive 6 utilise la fermeture de l'entrefer EV, par désaturation du circuit 2 au niveau de l'entrefer EV due au fait que la force $FAt_a$ est très élevée par rapport à la force $FAt_c$, en raison du défaut au niveau du réseau et du fort courant qui traverse la bobine 1.

Il s'agit d'un fonctionnement passif, sans besoin de contrôle de la commande passive 6. L'intensité du courant continu traversant le bobinage 3, fixée préalablement au défaut, est le seul paramètre de réglage du niveau de limitation du limiteur 10.

La source est protégée pour supporter l'énergie transitoire qu'elle reçoit pendant la durée du défaut.

On décrit dans un deuxième temps une commande active de l'ouverture et de la fermeture de l'entrefer EV, représentée sur la figure 8.

Dans ce cas, le limiteur 10 comporte une commande 6 active de l'ouverture et de la fermeture de l'entrefer EV.

La commande 6 active comporte un interrupteur 61 de puissance (commandé à l'ouverture et à la fermeture), entre la source 5 et le bobinage 3.

L'interrupteur 61 peut

- jouer le rôle d'une liaison entre la source 5 et le bobinage 3 (on est alors dans le premier état de fonctionnement du limiteur), ou
- annuler le courant continu dans le bobinage 3 ($FAt_c$

est alors d'intensité nulle, et on est alors dans le deuxième état de fonctionnement du limiteur par exemple).

La commande 6 comporte un détecteur 62 qui définit le critère d'ouverture de l'interrupteur 61.

Le détecteur 62 compare l'amplitude du courant de défaut à celui d'un seuil de réglage.

Il est ainsi possible de faire fonctionner le limiteur dans le troisième état, dans une plage de courant de défaut légèrement supérieur au courant en régime normal, mais inférieur au seuil. Au-delà du seuil, l'interrupteur 61 s'ouvre et le limiteur 10 passe en quelques millisecondes dans son deuxième état (EV fermé).

Lorsque le défaut est éliminé, le détecteur 62 referme l'interrupteur 61.

La commande 60 active comporte avantageusement un limiteur 63 de surtension de coupure de courant continu, branché en parallèle de la source 8, par exemple un parafoudre à oxyde de zinc (ZnO), et/ou une diode de roue libre en série avec une résistance, tous deux connus de l'homme du métier.

On décrit dans un troisième temps une commande intelligente, représentée schématiquement sur la figure 9, dans laquelle la commande 6 est reliée à une source 5 comportant un variateur 51 de l'intensité du courant dans le bobinage 3.

Le variateur 51 est un variateur électronique de puissance, connu de l'homme du métier, qui délivre un courant comportant une composante continue, mais peut aussi comporter des composantes alternatives, notamment au double de la fréquence du réseau.

Selon la valeur du courant du réseau mesurée par la commande 6 (régime normal, ou intensité du courant légèrement supérieure au courant en régime normal, ou enfin court-circuit), la commande 6 commande le variateur 51 qui fait alors passer le limiteur 10 dans l'état magnétique de fonctionnement 1, 2 ou 3 le plus adapté au contexte.

La commande 6 peut aussi être télécommandée pour prendre en compte le fonctionnement des dispositifs de protection du réseau, voire modifier ses seuils de réglage selon les besoins.

Le variateur 51 est avantageusement pourvu de dispositifs de protection, connu de l'homme du métier, contre les surintensités et surtensions.

La figure 10 correspond à un mode de réalisation simple de l'entrefer EV comportant une seule paire 40 de trous 4. Comme le représente schématiquement la flèche 41, la paire 40 forme un dipôle magnétique dont l'axe est symétrique par rapport à un axe A-A de symétrie du circuit 2. Le respect de cette symétrie vise à annuler la circulation d'un flux continu Fc parasite dans la totalité du circuit 2 (tel que le trajet "a" figure 2A).

La figure 11 représente un autre mode de réalisation comportant deux paires 40 de trous 4. Comme le représente schématiquement la flèche 41, chaque paire 40 forme un dipôle magnétique. La somme résultante des dipôles 41 est nulle. Elle n'engendre donc aucune circulation dans la totalité du circuit 2.

On comprend que l'on peut utiliser aussi plusieurs paires de trous, pour constituer un réseau de trous et augmenter ainsi la surface de l'EV sur la plaque 21. La multiplication des trous peut permettre ainsi de régler le niveau de saturation de l'entrefer EV. Ce choix peut être intéressant pour augmenter la dynamique de réglage du troisième état de l'entrefer EV.

On peut aussi créer plusieurs entrefers EV grâce à plusieurs paires de trous.

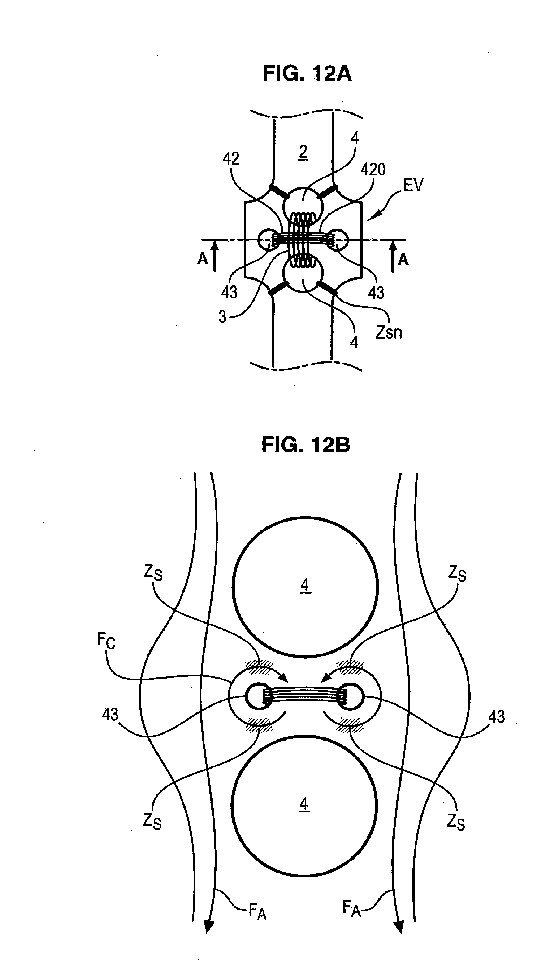

La figure 12A montre que, selon une autre variante, l'entrefer EV comporte en outre une paire 42 de trous 43 auxiliaires, dont le diamètre est plus faible que les trous 4, et dont l'alignement est perpendiculaire à l'alignement des trous 4 de la paire 40 de trous 4 sur laquelle est bobiné le bobinage 3. L'alignement des trous 43 est ainsi par exemple confondu avec l'axe A-A précité.

La paire 42 comporte un bobinage auxiliaire 420 qui permet de saturer une partie du pourtour des trous 4.

L'activation de cette saturation locale au moment où le courant du bobinage 3 est en cours d'annulation permet d'augmenter la rapidité de fermeture magnétique de l'entrefer EV.

La figure 12B montre les flux magnétiques $F_A$ et Fc et les zones saturées Zs par les trous 43 auxiliaires. Cette saturation locale revient à insérer un entrefer virtuel dans le circuit magnétique de la bobine 3. Son impédance reste donc faible malgré la diminution du courant continu. La constante de temps d'annulation du courant de la bobine 3 reste de l'ordre de la milliseconde. L'activation de la saturation autour des trous 43 n'est utile que pendant ces quelques millisecondes.

Dans l'exemple schématisé sur la figure 12A, en régime normal, l'EV est ouvert en saturant préférentiellement les quatre zones Zsn du circuit 2.

La figure 13 montre que, selon encore une autre variante, l'entrefer EV comporte une spire 44 en court-circuit entre les trous 4 de la paire 40, en complément à la bobine 3. La fonction de la spire 44 en court-circuit est d'absorber une partie de l'énergie transitoire lors du défaut et de protéger ainsi la source 5 continue pendant la durée du défaut. La résistance de la spire 44 est choisie en conséquence. Cette variante optionnelle s'applique de préférence à la commande passive décrite ci-dessus. En régime normal, la spire 44 n'est parcourue par aucun courant alternatif puisque l'entrefer EV est ouvert.

De même, l'entrefer EV peut comporter en outre au moins un aimant permanent pour assurer tout ou partie de la saturation locale.

De manière classique connue de l'homme du métier, l'isolation des différents éléments du limiteur peut être "sèche" ou "papier/huile", selon le niveau de tension.

On comprend que pour optimiser la construction du limiteur, l'homme du métier peut préférer une autre disposition de la fenêtre 23 réalisée avec les noyaux et culasses, afin de faciliter par exemple le raccordement aux bornes de sortie, ou encore répondre à l'exigence de tenue aux essais diélectriques (choc de foudre).

De même, le choix d'une isolation sèche (par exemple par une résine époxy) ou d'une isolation à huile (par papier imprégné) peut conduire à disposer la fenêtre 23 d'une autre manière que celle présentée schématiquement dans les figures.

Enfin, on comprend que la réalisation d'un limiteur multiphasé, et notamment triphasé, peut être basée sur le regroupement de plusieurs unités monophasées identiques ou sur la conception d'un circuit magnétique multiphasé, dans les règles de l'art connues de l'homme du métier. Un des buts d'une telle réalisation est de réduire la masse et l'encombrement du circuit magnétique. Un autre but peut être d'obtenir des performances différentes en mode direct et en mode homopolaire, notamment quand les sources de perturbations de tension et/ou les défauts sont différents selon ces modes, notamment en raison des types de mise à la terre du réseau alternatif.

Certains modes de réalisation du limiteur pourront donc comporter plusieurs fenêtres et plusieurs paires de trous.

Le limiteur selon l'invention peut avantageusement être combiné à une fonction de régulation de tension dans le réseau.

## Revendications

1. Limiteur (10) de courant, adapté pour être branché en série entre d'une part une source (S) de courant alternatif et d'autre part une charge (C), comportant un circuit magnétique (2) comportant un noyau (20), au moins une bobine (1) inductive bobinée autour du noyau (20) et reliée d'une part à la source (S) de courant alternatif et d'autre part à la charge (C), la bobine (1) ayant une impédance,
un entrefer virtuel (EV),
le limiteur (10) fonctionnant entre au moins deux états, à savoir :

   un premier état dans lequel l'entrefer virtuel (EV) est ouvert et ouvre magnétiquement le circuit magnétique (2) en saturant magnétiquement le circuit (2), l'impédance de la bobine (1) inductive étant faible, de sorte que le courant entre la source (S) et la charge (C) n'est pas limité, et
   un deuxième état dans lequel l'entrefer virtuel (EV) est fermé et ferme magnétiquement le circuit (2) magnétique, l'impédance de la bobine (1) étant importante, de sorte que le courant entre la source (S) et la charge (C) est limité, **caractérisé en ce que** l'entrefer virtuel (EV) comporte :

      - au moins une paire (40) de trous (4) dans le circuit (2) magnétique, et
      - un bobinage (3) se bobinant entre les trous

(4) de chaque paire (40) de trous (4), et relié à une source (5) de courant continu.

2. Limiteur selon la revendication 1, en outre adapté pour fonctionner selon un troisième état dans lequel l'entrefer virtuel (EV) est partiellement ouvert et ouvre partiellement le circuit (2) en désaturant partiellement le circuit au niveau de l'entrefer EV, de sorte que le courant entre la source (S) et la charge (C) est partiellement limité.

3. Limiteur selon l'une des revendications 1 ou 2, comportant une commande (6) passive ou active ou intelligente de l'ouverture totale ou partielle ou de la fermeture totale ou partielle de l'entrefer virtuel (EV).

4. Limiteur selon la revendication 3, dans lequel la commande (6) passive comporte une liaison permanente entre la source (5) de courant continu et le bobinage (3).

5. Limiteur selon la revendication 3, dans lequel la commande (6) active comporte un interrupteur (61) commandé par un détecteur (62) entre la source (5) de courant continu et le bobinage (3).

6. Limiteur selon la revendication 3, dans lequel la commande (6) intelligente commande une source (5) de courant continu comportant un variateur (51) relié au bobinage (3).

7. Limiteur selon l'une des revendications 1 à 6, dans lequel l'entrefer virtuel (EV) comporte une paire (42) de trous (43) auxiliaires, comportant un bobinage (420) auxiliaire, les trous (43) auxiliaires ayant un alignement perpendiculaire à un alignement des trous (4) de la paire (40) de trous (4) sur laquelle est bobiné le bobinage (3).

8. Limiteur selon l'une des revendications 1 à 7, dans lequel l'entrefer virtuel (EV) comporte une spire (44) en court-circuit entre les trous (4) de la paire (40).

9. Limiteur selon l'une des revendications 1 à 8, dans lequel l'entrefer virtuel (EV) comporte un entrefer (EM) mécanique.

10. Limiteur selon l'une des revendications 1 à 9, dans lequel l'entrefer virtuel (EV) comporte en outre au moins un aimant permanent.

## Patentansprüche

1. Strombegrenzer (10) zum Anordnen in serieller Schaltung zwischen einer Wechselstromquelle (S) einerseits und einer Last (C) andererseits, wobei der Strombegrenzer aufweist:

einen magnetischen Kreis (2) mit einem Kern (20),

mindestens eine induktive Spule (1), die um den Kern (20) gewickelt ist und einerseits mit der Wechselstromquelle (S) und andererseits mit der Last (C) verbunden ist, wobei die Spule (1) eine Impedanz hat,

einen virtuellen Spalt (EV),

wobei der Begrenzer (10) zwischen mindestens zwei Zuständen arbeitet, nämlich:

einem ersten Zustand, in welchem der virtuelle Spalt (EV) offen ist und durch magnetisches Sättigen des Kreises (2) magnetisch den magnetischen Kreis (2) öffnet, wobei die Impedanz der induktiven Spule (1) klein ist, so dass der Strom zwischen der Quelle (S) und der Last (C) nicht begrenzt wird, und

einem zweiten Zustand, in welchem der virtuelle Spalt (EV) geschlossen ist und magnetisch den magnetischen Kreis (2) schließt, wobei die Impedanz der induktiven Spule (1) groß ist, so dass der Strom zwischen der Quelle (S) und der Last (C) begrenzt wird,

**dadurch gekennzeichnet, dass** der virtuelle Spalt (EV) aufweist:

- mindestens ein Paar (40) von Bohrungen (4) in dem magnetischen Kreis (2) und
- eine Wicklung (3), die zwischen den Bohrungen (4) jedes Paars (40) von Bohrungen (4) gewickelt ist und mit einer Gleichstromquelle (5) verbunden ist.

2. Begrenzer nach Anspruch 1, ferner konfiguriert, um in einem dritten Zustand zu arbeiten, in welchem der virtuelle Spalt (EV) teilweise offen ist und durch teilweises Entsättigen des Kreises im Bereich des Spalts (EV) teilweise den Kreis (2) öffnet, so dass der Strom zwischen der Quelle (S) und der Last (C) teilweise begrenzt wird.

3. Begrenzer nach einem der Ansprüche 1 oder 2, mit einer passiven oder aktiven oder intelligenten Steuereinrichtung (6) zur Steuerung des vollständigen oder teilweisen Öffnens oder des vollständigen oder teilweisen Schließens des virtuellen Spalts (EV).

4. Begrenzer nach Anspruch 3, wobei die passive Steuereinrichtung (6) eine dauerhafte Verbindung zwischen der Gleichstromquelle (5) und der Wicklung (3) aufweist.

5. Begrenzer nach Anspruch 3, wobei die aktive Steuereinrichtung (6) einen von einem Detektor (62) gesteuerten Schalter (61) zwischen der Gleichstromquelle (5) und der Wicklung (3) aufweist.

6. Begrenzer nach Anspruch 3, wobei die intelligente Steuereinrichtung (6) eine Gleichstromquelle (5) steuert, die einen mit der Wicklung (3) verbundenen Wandler (51) aufweist.

7. Begrenzer nach einem der Ansprüche 1 bis 6, wobei der virtuelle Spalt (EV) ein Paar (42) von Hilfsbohrungen (43) mit einer Hilfswicklung (420) aufweist, wobei die Hilfsbohrungen (43) eine Ausrichtung haben, die orthogonal zu einer Ausrichtung der Bohrungen (4) des Paars (40) von Bohrungen (4) ist, das mit der Wicklung (3) versehen ist.

8. Begrenzer nach einem der Ansprüche 1 bis 7, wobei der virtuelle Spalt (EV) eine kurzgeschlossene Windung (44) zwischen den Bohrungen (4) des Paars (40) aufweist.

9. Begrenzer nach einem der Ansprüche 1 bis 8, wobei der virtuelle Spalt (EV) einen mechanischen Spalt (EM) aufweist.

10. Begrenzer nach einem der Ansprüche 1 bis 9, wobei der virtuelle Spalt (EV) außerdem mindestens einen Permanentmagneten aufweist.

**Claims**

1. Current limiter (10), adapted to be connected in series between an AC current source (S) and a load (C), comprising

a magnetic circuit (2) comprising a core (20),

at least one inductive coil (1) wound around the core (20) and connected to the AC current source (S) and to the load (C), the coil (1) having an impedance,

a virtual air-gap (EV),

the limiter (10) operating between at least two states, namely:

a first state wherein the virtual air-gap (EV) is open and magnetically opens the magnetic circuit (2) by magnetically saturating the circuit (2), with the impedance of the inductive coil (1) being low, in such a way that the current between the source (S) and the load (C) is not limited, and

a second state wherein the virtual air-gap (EV) is closed and magnetically closes the magnetic circuit (2), with the impedance of the coil (1) being substantial, in such a way that the current between the source (S) and the load (C) is limited,

**characterised in that** the virtual air-gap (EV) comprises:

- at least one pair (40) of holes (4) in the magnetic circuit (2), and
- a winding (3) wound between the holes (4) of each pair (40) of holes (4), and connected to a DC current source (5).

2. Limiter according to claim 1, furthermore adapted to operate according to a third state wherein the virtual air-gap (EV) is partially open and partially opens the circuit (2) by partially desaturating the circuit on the air-gap EV, in such a way that the current between the source (S) and the load (C) is partially limited.

3. Limiter according to one of claims 1 or 2, comprising a passive or active or intelligent control (6) for the total or partial opening or the total or partial closing of the virtual air-gap (EV).

4. Limiter according to claim 3, wherein the passive control (6) comprises a permanent connection between the DC current source (5) and the winding (3).

5. Limiter according to claim 3, wherein the active control (6) comprises a switch (61) controlled by a detector (62) between the DC current source (5) and the winding (3).

6. Limiter according to claim 3, wherein the intelligent control (6) controls a DC current source (5) comprising a variator (51) connected to the winding (3).

7. Limiter according to one of claims 1 to 6, wherein the virtual air-gap (EV) comprises a pair (42) of auxiliary holes (43), comprising an auxiliary winding (420), with the auxiliary holes (43) having an alignment perpendicular to an alignment of the holes (4) of the pair (40) of holes (4) whereon the winding (3) is wound.

8. Limiter according to one of claims 1 to 7, wherein the virtual air-gap (EV) comprises a spire (44) as a short-circuit between the holes (4) of the pair (40).

9. Limiter according to one of claims 1 to 8, wherein the virtual air-gap (EV) comprises a mechanical air-gap (EM).

10. Limiter according to one of claims 1 to 9, wherein the virtual air-gap (EV) further comprises at least one permanent magnet.

# FIG. 1

Amplitude

----- Courant présumé
——— Courant limité

Limitation de la
première crête

d    p    t

## FIG. 2A

## FIG. 2B

## FIG. 3

Lev

31

Lem

32

Rit

33

S

C

## FIG. 4

27

C_F

2

iT

**FIG. 5A**

Impédance série faible
en régime normal

**FIG. 5B**

Limitation
du court-circuit

## FIG. 6A

## FIG. 6B

## FIG. 7A

## FIG. 7B

**FIG. 8**

ZnO 63

Source DC 5

**FIG. 9**

Variateur source de courant 51

Contrôle commande intelligent 6

**FIG. 10**

EV

**FIG. 11**

## FIG. 12A

## FIG. 12B

## FIG. 13

## FIG. 14

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4152637 A